# EUROPÄISCHE PATENTSCHRIFT

(11) **EP 2 841 772 B1**
(45) Veröffentlichungstag und Bekanntmachung des Hinweises auf die Patenterteilung: **16.05.2018**
(21) Anmeldenummer: 13708173.3
(22) Anmeldetag: 08.03.2013
(51) Int. Cl.: F16B 2/22, F16B 5/06

(54) **CLIPELEMENT SOWIE BAUTEILVERBINDUNG**
CLIP ELEMENT AND COMPONENT CONNECTION
ÉLÉMENT D'AGRAFAGE ET ASSEMBLAGE DE PIÈCES

(30) Priorität: 26.04.2012 DE 102012206934
(43) Veröffentlichungstag der Anmeldung: 04.03.2015
(73) Patentinhaber: Bayerische Motoren Werke Aktiengesellschaft, 80809 München (DE)
(72) Erfinder: ERNST, Mario, 84144 Geisenhausen (DE)
(86) Internationale Anmeldenummer: PCT/EP2013/054728
(87) Internationale Veröffentlichungsnummer: WO 2013/159977

(56) Entgegenhaltungen:
- EP-A1- 1 104 689
- DE-A1- 3 232 926
- DE-A1- 4 213 366
- FR-A1- 2 629 527
- GB-A- 1 023 511
- US-A- 5 629 823
- US-A1- 2011 296 764

## Beschreibung

Die vorliegende Erfindung betrifft ein Clipelement gemäß dem Oberbegriff des Patentanspruches 1 sowie eine Bauteilverbindung mit einem Clipelement gemäß dem Oberbegriff des Patentanspruches 2.

Ein derartiges Clipelement bzw. eine derartige Bauteilverbindung ist aus der DE 42 13 366 A1 bekannt.

Zum technischen Hintergrund der Erfindung zählen die EP 1 104 689 A1 , FR 2 629 527 A1, GB 1 023 511 A, DE 32 32 926 A1, US 2011/296764 A1 sowie die US 5,629,823 A.

Aufgabe der Erfindung ist es, ein Clipelement zu schaffen, das in einfacher Weise eine Verbindung von Bauteilen ermöglicht, sowie eine entsprechende Bauteilverbindung.

Diese Aufgabe wird durch die Merkmale des Patentanspruches 1 bzw. 2 gelöst. Vorteilhafte Ausgestaltungen und Weiterbildungen der Erfindung sind den Unteransprüchen zu entnehmen.

Ausgangspunkt der Erfindung ist eine Bauteilverbindung mit einem ersten Bauteil und einem damit über eine Steck- bzw. Klemmverbindung zu verbindenden zweiten Bauteil. Bei einem oder beiden Bauteilen kann es sich z.B. um Fahrzeugkarosseriebauteile handeln. Die Erfindung ist jedoch nicht auf den Bereich "Automobilbau" beschränkt, sondern ganz allgemein überall dort einsetzbar, wo es darum geht, zwei Bauteile in einfacher und kostengünstiger Weise über eine Steck- bzw. Klemmverbindung miteinander zu verbinden.

Von dem ersten Bauteil steht ein "männliches Formschlusselement" ab. Der Begriff "männliches Formschlusselement" ist äußerst breit zu interpretieren. Gemeint ist ganz allgemein ein von dem ersten Bauteil abstehendes Element, welches vorzugsweise einen Hinterschnitt aufweist. Das männliche Formschlusselement kann z.B. eine Kugel sein oder durch einen Teil einer Kugel (z.B. Kugelkalotte) gebildet sein oder eine kugelähnliche oder kegelige Form oder eine Zapfenform haben.

In dem zweiten Bauteil ist ein Durchgangsloch vorgesehen, in welches das männliche Formschlusselement hinein ragt bzw. durch welches das männliche Formschlusselement zumindest teilweise hindurch ragt.

Der Kern der Erfindung besteht in einem mit dem männlichen Formschlusselement zusammenwirkenden Clipelement. Das Clipelement kann z.B. in der Form eines Pilzes oder eines Hutes ausgebildet sein oder in ein anderes Bauteil integriert sein. Das Clipelement gemäß der Erfindung weist einen hohlen, radial elastischen Schaft auf. Es ist vorgesehen, dass von dem Schaft nach außen ein Klemmrand absteht.

Bei einer Bauteilverbindung gemäß der Erfindung ist der radial elastische, hülsenartige Abschnitt (Schaft) form- und/oder reibschlüssig auf das männliche Formschlusselement aufgeclipst. Das männliche Formschlusselement weist in Bezug auf zumindest einen vorderen Abschnitt des hülsenartigen Abschnitts ein gewisses Übermaß auf. Beim Aufstecken bzw. Aufclipsen des hülsenartigen Abschnitts auf das männliche Formschlusselement wird der vordere Abschnitt des hülsenartigen Abschnitts zunächst etwas radial aufgeweitet. Wird der hülsenartige Abschnitt weiter auf das männliche Formschlusselement aufgedrückt, so kann, sofern das männliche Formschlusselement einen Hinterschnitt aufweist, der vordere Abschnitt des hülsenartigen Abschnitts wieder ein Stück weit radial nach innen zurückfedern, wodurch sich zusätzlich zu dem Reibschluss zwischen dem Innenumfang des hülsenartigen Abschnitts des Clipelements und dem männlichen Formschlusselement ein gewisser Formschluss ergibt. Es kann also vorgesehen sein, dass der hülsenartige Abschnitt des Clipelements im aufgeclipsten Zustand einen Hinterschnitt des Clipelements formschlüssig hintergreift.

Es ist vorgesehen, dass vom dem hülsenartigen Abschnitt (Schaftabschnitt) nach außen ein "Klemmrand" absteht, welcher das Durchgangsloch zumindest teilweise übergreift. Der Klemmrand ist zumindest in Längsrichtung des hülsenartigen Abschnitts in gewissem Umfang biegeelastisch.

Ferner kann vorgesehen, dass der Klemmrand an einer dem ersten Bauteil abgewandten Seite des zweiten Bauteils an dem zweiten Bauteil anliegt und dieses in Richtung des ersten Bauteils drückt. Alternativ dazu kann vorgesehen sein, dass der Klemmrand fest mit dem zweiten Bauteil verbunden ist.

In jedem der beiden oben beschriebenen Fälle ist das zweite Bauteil über das Clipelement, welches an dem fest mit dem ersten Bauteil verbundenen männlichen Formschlusselement festgeclipst ist, mit dem ersten Bauteil verbunden.

Die beiden Bauteile können somit ganz einfach durch Aufclipsen bzw. Aufstecken des Clipelements auf das fest mit dem ersten Bauteil verbundene männliche Formschlusselement miteinander verbunden werden. Das Aufclipsen kann von Hand durchgeführt werden. Alternativ dazu kann auch vorgesehen sein, dass das Clipelement automatisiert, z.B. mittels eines Roboters, welcher zuvor die räumliche Lage des männlichen Formschlusselements ermittelt, aufgeclipst wird. Nach einer Weiterbildung der Erfindung ist das in dem zweiten Bauteil vorgesehene Durchgangsloch kreisförmig. Dementsprechend kann vorgesehen sein, dass der hülsenartige Abschnitt des Clipelements (d.h. der Schaftabschnitt) die Form eines Kreiszylinders oder eine einem Kreiszylinder ähnliche Form hat.

Alternativ dazu kann vorgesehen sein, dass das Durchgangsloch ein Langloch ist und der hülsenartige Abschnitt die Form eines an die Form des Langlochs angepasste Zylinderform hat. Die Form des hülsenartigen Abschnitts muss aber nicht notwendigerweise an die Form des Langlochs angepasst sein. Denkbar ist auch, dass das Durchgangsloch als Langloch ausgebildet ist und ein Clipelement verwendet wird, welches einen kreiszylindrischen Schaftabschnitt aufweist, was den Vorteil hat, dass in Längsrichtung des Langlochs selbst im montierten Zustand der beiden Bauteile eine gewisse Relatiwerschiebung der beiden Bauteile möglich ist. Sofern der Klemmrand mit dem zweiten Bauteil verbunden ist, kann vorgesehen sein, dass der Klemmrand einstückig mit dem zweiten Bauteil verbunden ist. Insbesondere kann vorgesehen sein, dass der Klemmrand und/oder das gesamte Clipelement einstückig mit dem zweiten Bauteil verbunden bzw. in das zweite Bauteil integriert ist und somit integraler Bestandteil des zweiten Bauteils ist.

Entsprechend der Form eines Pilzes kann vorgesehen sein, dass der Klemmrand ein umlaufender Klemmrand ist. Dies muss aber nicht zwingend der Fall sein. "Der Klemmrand" könnte auch durch mehrere sich über einen Umfangsabschnitt erstreckende Klemmsegmente, mehrere Klemmarme, Klemmnasen o.ä. gebildet sein.

Der hülsenartige Abschnitt (Schaftabschnitt) des Clipelements ist gemäß der Erfindung zumindest an seiner dem Klemmrand abgewandten Stirnseite offen. Dies ist erforderlich, um den hülsenartigen Abschnitt auf ein männliches Formschlusselement aufstecken zu können. Das andere Ende des hülsenartigen Abschnitts ist ebenfalls offen. Wie bereits erwähnt, kann das männliche Formschlusselement z.B. durch eine mit dem ersten Bauteil verbundene Kugel gebildet sein. Denkbar ist auch, dass das männliche Formschlusselement durch mehrere einzelne miteinander verbundene Elemente, insbesondere durch mehrere einzelne miteinander verbundene kugelförmige oder kugelähnliche Elemente gebildet ist. Im Falle mehrerer kugelförmiger Elemente können diese hintereinander angeordnet sein (Doppel- oder Mehrfachkugel). Das männliche Formschlusselement kann stoffschlüssig mit dem ersten Bauteil verbunden sein. Es kann insbesondere auf das erste Bauteil aufgeschweißt sein. Das erste Bauteil und/oder das männliche Formschlusselement können z.B. aus Metall, insbesondere aus Stahl oder Aluminium, bestehen. Das zweite Bauteil kann ebenfalls aus Metall bestehen. Denkbar ist aber auch ein Mischbau, d.h .eine Bauteilverbindung, bei der die beiden Bauteile aus unterschiedlichen Materialien bestehen. In Betracht kommen insbesondere Bauteilverbindungen, bei denen eines der Bauteile aus Metall und das andere Bauteil aus Kunststoff, z.B. aus einem faserverstärkten Kunststoff, insbesondere aus einem glas- oder kohlefaserverstärkten Kunststoff besteht.

Das Clipelement kann vorzugsweise ebenfalls aus Kunststoff hergestellt sein. Bei dem Clipelement kann es sich beispielsweise um ein Spritzgussteil handeln.

Im Folgenden wird die Erfindung im Zusammenhang mit der Zeichnung näher erläutert. Es zeigen:
- Figur 1: ein Ausführungsbeispiel eines pilzartigen Clipelements;
- Figur 2: ein Ausführungsbeispiel einer Bauteilverbindung gemäß der Erfindung;
- Figur 3: ein zweites Bauteil, in welches ein Clipelement gemäß der Erfindung integriert ist.

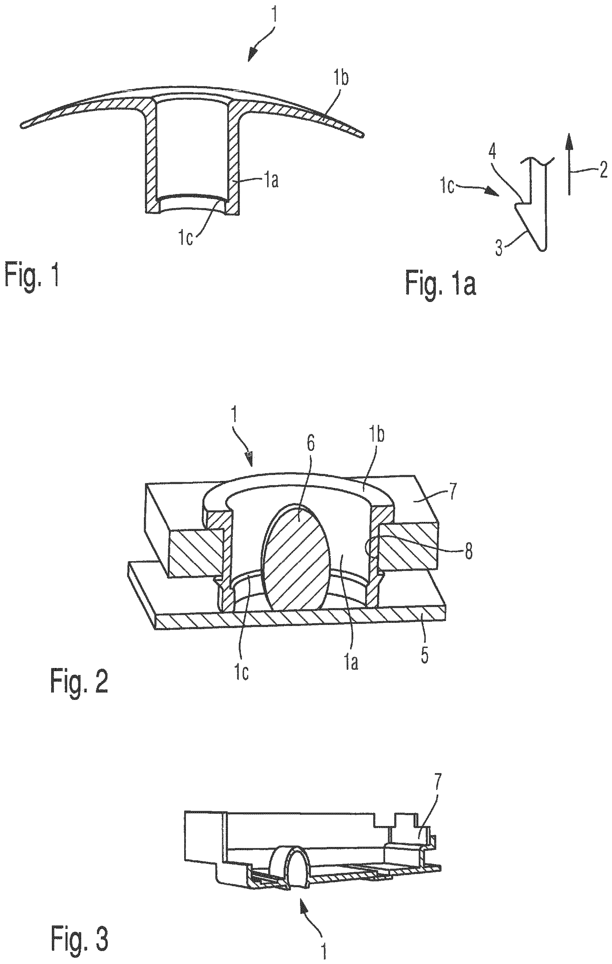

Figur 1 zeigt ein pilzförmiges Clipelement 1, welches einen hohlen, radial elastischen bzw. hülsenartigen Abschnitt (Schaft) 1a und einen davon nach außen abstehenden, sich über den gesamten Umfang des Schaftabschnitts 1a erstreckenden Klemmabschnit1 1b aufweist. Der Klemmabschnitt 1b ist in einer Längsrichtung des Schaftabschnitts, d.h. um Achsen, die senkrecht zur Längsrichtung des Schaftabschnitts 1a sind, biegeelastisch.
Das Clipelement 1 kann z.B. aus Kunststoff hergestellt sein. Bei dem in Figur 1 gezeigten Ausführungsbeispiel ist am Innenumfang des Schaftabschnitts 1a ein in Umfangsrichtung umlaufender Absatz 1c vorgesehen, der einen etwas geringeren Durchmesser aufweist als der Innenumfang des Schaftabschnitts 1a oberhalb des Absatzes 1c. Der Durchmesserunterschied kann im Bereich von einigen Hundertstel oder einigen Zehntel Millimetern liegen. Das in Figur 1 gezeigte Clipelement ist dazu vorgesehen, auf ein männliches Formschlusselement, das z.B. die Form einer Kugel oder eine kugelähnliche Form haben kann, aufgeclipst zu werden. Das männliche Formschlusselement (nicht dargestellt) weist in Bezug auf den Durchmesser des Absatzes 1c ein gewisses Übermaß auf. Soll das Clipelement 1 auf ein derartiges männliches Formschlusselement aufgeclipst werden, so ist hierzu ein gewisser Kraftaufwand erforderlich. Das Clipelement 1 wird hierzu in Längsrichtung des Schaftabschnitts auf das männliche Formschlusselement aufgesteckt. Dabei wird der vordere Abschnitt des Schaftabschnitts 1a radial nach außen aufgeweitet, bis der Absatz 1c (vgl. auch Fig. 1a) über den "größten Durchmesser" des männlichen Formschlusselements geglitten ist. Sofern das männliche Formschlusselement einen Hinterschnitt aufweist, verrastet der Absatz 1c mit dem Hinterschnitt des männlichen Formschlusselements.

Wie aus der vergrößert dargestellten Figur 1a ersichtlich ist, weist der Absatz 1c von der dem Klemmrand 1b abgewandten Seite des Schaftabschnitts 1a eine umlaufende Schräge auf, was es ermöglicht, das Clipelement mit relativ geringem Kraftaufwand auf ein männliches Formschlusselement aufzuclipsen. Ein Abziehen des Clipelements 1 von dem männlichen Formschlusselement ist hingegen nur mit deutlich größerem Kraftaufwand möglich, da in Abziehrichtung 2 (vgl. Figur 1a) keine derartige Schräge vorgesehen ist. Einzelheiten der geometrischen Ausgestaltung des Absatzes 1c sind in Figur 1 dargestellt. Deutlich zu erkennen ist die "Aufsteckschräge" 3 und die senkrecht zur Längsrichtung des Schaftabschnitts 1a verlaufende Formschlussfläche 4.

Das in Figur 1 gezeigte Clipelement 1 kann zu Verbindung zweier Bauteile verwendet werden. Von dem ersten Bauteil steht ein männliches Formschlusselement (z.B. eine auf das erste Bauteil aufgeschweißte Kugel) ab. Das zweite Bauteil weist ein Durchgangsloch, in welches das männliche Formschlusselement hinein ragt. Nach dem Aneinanderfügen der beiden Bauteile braucht lediglich das Clipelement 1 mit seinem Schaftabschnitt 1a auf das männliche Formschlusselement aufgeclipst werden. Das in dem zweiten Bauteil vorgesehene Durchgangsloch und der Klemmrand 1b sind so aufeinander abgestimmt, dass der Klemmrand 1b das Durchgangsloch übergreift, wodurch die beiden Bauteile miteinander verbunden sind.

Figur 2 zeigt ein Ausführungsbeispiel einer solchen Bauteilverbindung. Die Bauteilverbindung weist ein erstes Bauteil 5 auf, von dem ein ellipsoid artiges männliches Formschlusselement 6 absteht. In einem zweiten Bauteil 7 ist ein langlochartiges Durchgangsloch 8 vorgesehen.

Auf das männliche Formschlusselement 6 ist hier ein Clipelement 1 aufgeclipst, das einen hülsenartigen Schaftabschnitt 1a und einen das Durchgangsloch 8 übergreifenden Klemmrand 1b aufweist. Wie aus Figur 2 ersichtlich ist, ist das Clipelement 1, insbesondere dessen hülsenartiger Abschnitt 1a an die Form des Langlochs angepasst. Das Clipelement bzw. der Absatz 1c des Clipelements 1 hintergreift das männliche Formschlusselement hier lediglich auf zwei einander gegenüberliegenden Seiten, nämlich in einem Bereich hinter der Zeichenebene und in einem Bereich vor der Zeichenebene. Quer dazu kann das zweite Bauteil 7 bzw. das in dessen Durchgangsloch 8 eingesteckte Clipelement 1 relativ zu dem ersten Bauteil 5 verschoben werden.
Figur 3 zeigt ein Ausführungsbeispiel eines zweiten Bauteils 7, in das ein Clipelement 1 integriert ist. Das zweite Bauteil 7 und das Clipelement 1 können aus einem Kunststoffmaterial gegossen bzw. gespritzt sein. Bei dem in Figur 3 gezeigten Ausführungsbeispiel ist das Clipelement 1 somit integraler Bestandteil des zweiten Bauteils 7.

## Patentansprüche

1. Clipelement (1) mit einem hohlen, radialelastischen Schaft (1a) und einem von dem Schaft nach außen abstehenden Klemmrand (1b), wobei das Clipelement pilzförmig ausgebildet ist,
• der Klemmrand (1b) in einer Längsrichtung des Schafts (1a) und somit um Achsen, die senkrecht zur Längsrichtung des Schafts (1a) sind, biegeelastisch ist und
• an einem Innenumfang des Schafts (1a) ein in Umfangsrichtung umlaufender Absatz (1c) vorgesehen ist
**dadurch gekennzeichnet, dass**
der hülsenartige Abschnitt (1a) an seinen beiden Stirnseiten offen ist.

2. Bauteilverbindung, mit
• einem ersten Bauteil (5), von dem ein männliches Formschlusselement (6) absteht,
• einem zweiten Bauteil (7), welches ein Durchgangsloch (8) aufweist, in welches das männliche Formschlusselement (6) hineinragt,
• einem Clipelement (1), welches
▪ einen radialelastischen, hülsenartigen Abschnitt (1a), der form- und/oder reibschlüssig auf das männliche Formschlusselement (6) aufgeclipst ist und
▪ einen nach außen von dem hülsenartigen Abschnitt (1a) abstehenden Klemmrand (1b) aufweist, der das Durchgangsloch (8) zumindest teilweise übergreift und an einer dem ersten Bauteil (5) abgewandten Seite des zweiten Bauteils (7) an dem zweiten Bauteil (7) anliegtoder fest mit dem zweiten Bauteil (7) verbunden ist, wobei der Klemmrand (1b) in einer Längsrichtung des Schafts (1a) und somit um Achsen, die senkrecht zur Längsrichtung des Schafts (1a) sind, biegeelastisch ist und
▪ an einem Innenumfang des Schafts (1a) ein in Umfangsrichtung umlaufender Absatz (1c) vorgesehen ist und
• das männliche Formschlusselement (6) auf das erste Bauteil (5) aufgeschweißt ist,
**dadurch gekennzeichnet, dass**
• das männliche Formschlusselement (6) die Form einer Kugel oder eine kugelähnliche Form hat und
• der hülsenartige Abschnitt (1a) an seinen beiden Stirnseiten offen ist.

3. Bauteilverbindung nach Anspruch 2,
**dadurch gekennzeichnet, dass** das Durchgangsloch (8) kreisförmig ist und der hülsenartige Abschnitt (1a) die Form eines Kreiszylinders oder eine einem Kreiszylinder ähnelnde Form hat.

4. Bauteilverbindung nach Anspruch 2,
**dadurch gekennzeichnet, dass** das Durchgangsloch (8) ein Langloch und der hülsenartige Abschnitt eine an die Form des Langlochs (8) angepasste Zylinderform hat.

5. Bauteilverbindung nach einem der Ansprüche 2 bis 4,
**dadurch gekennzeichnet, dass** der Klemmrand (1b) einstückig mit dem zweiten Bauteil (7) verbunden ist.

6. Bauteilverbindung nach einem der Ansprüche 2 bis 5,
**dadurch gekennzeichnet, dass** ein dem Klemmrand (1b) abgewandter Abschnitt (1c) des hülsenartigen Abschnitts (1a) das männliche Formschlusselement (6) formschlüssig hintergreift.

7. Bauteilverbindung nach einem der Ansprüche 2 bis 6, **dadurch gekennzeichnet, dass** der Klemmrand (1b) ein umlaufender Klemmrand ist.

8. Bauteilverbindung nach einem der Ansprüche 2 bis 7,
**dadurch gekennzeichnet, dass** der Klemmrand (1b) eine hutartige oder pilzartige Form hat.

9. Bauteilverbindung nach einem der Ansprüche 2 bis 8,
**dadurch gekennzeichnet, dass** das männliche Formschlusselement (6) mehrere kugelförmige Elemente bzw. Abschnitte aufweist.

10. Bauteilverbindung nach Anspruch 9,
**dadurch gekennzeichnet, dass** die mehreren kugelförmigen Elemente bzw. Abschnitte des männlichen Formschlusselements (6) in einer Reihe hintereinander angeordnet sind.

11. Bauteilverbindung nach einem der Ansprüche 2 bis 10,
**dadurch gekennzeichnet**, dassmindestens eines der beiden Bauteile (5, 7) ein Fahrzeugkarosseriebauteil ist.

12. Clipelement nach Anspruch 1 bzw. Bauteilverbindung nach einem der Ansprüche 2 bis 11, **dadurch gekennzeichnet, dass** das Clipelement (1) aus Kunststoff besteht.

## Claims

1. A clip element (1) with a hollow, radially elastic shank (1a) and a clamping edge (1b) protruding from the shank outwards, wherein the clip element is mushroom-shaped,
• the clamping edge (1b) is flexurally elastic in a longitudinal direction of the shank (1a) and hence about axes which are perpendicular to the longitudinal direction of the shank (1a), and
• a shoulder (1c) which is circumambient in the peripheral direction is provided on an inner periphery of the shank (1a),
**characterised in that**
the sleeve-type portion (1a) is open at its two end faces.

2. A component connection, with
• a first component (5), from which a male form-fitting element (6) protrudes,
• a second component (7) which has a through-hole (8) into which the male form-fitting element (6) projects,
• a clip element (1) which
▪ has a radially elastic, sleeve-type portion (1a) which is clipped in form-fitting manner and/or frictionally onto the male form-fitting element (6), and
▪ a clamping edge (1b) which protrudes outwards from the sleeve-type portion (1a) and which at least partially reaches across the through-hole (8) and lies against the second component (7) on a side of the second component (7) which is remote from the first component (5), or is connected securely to the second component (7), the clamping edge (1b) being flexurally elastic in a longitudinal direction of the shank (1a) and hence about axes which are perpendicular to the longitudinal direction of the shank (1a), and
▪ a shoulder (1c) which is circumambient in the peripheral direction is provided on an inner periphery of the shank (1a), and
▪ the male form-fitting element (6) is welded onto the first component (5),
**characterised in that**
• the male form-fitting element (6) has the form of a sphere or a sphere-like form, and
• the sleeve-type portion (1a) is open at its two end faces.

3. A component connection according to Claim 2,
**characterised in that** the through-hole (8) is circular and the sleeve-type portion (1a) has the form of a circular cylinder or a form similar to a circular cylinder.

4. A component connection according to Claim 2,
**characterised in that** the through-hole (8) has an elongate hole and the sleeve-type portion has a cylindrical form adapted to the form of the elongate hole (8).

5. A component connection according to one of Claims 2 to 4,
**characterised in that** the clamping edge (1b) is connected in one piece with the second component (7).

6. A component connection according to one of Claims 2 to 5,
**characterised in that** a portion (1c) of the sleeve-type portion (1a) which is remote from the clamping edge (1b) engages behind the male form-fitting element (6) in a form-fit.

7. A component connection according to one of Claims 2 to 6,
**characterised in that** the clamping edge (1b) is a circumambient clamping edge.

8. A component connection according to one of Claims 2 to 7,
**characterised in that** the clamping edge (1b) has a hat-type or mushroom-type form.

9. A component connection according to one of Claims 2 to 8,
**characterised in that** the male form-fitting element (6) has a plurality of spherical elements or portions.

10. A component connection according to Claim 9,
**characterised in that** the plurality of spherical elements or portions of the male form-fitting element (6) are arranged in a row one behind another.

11. A component connection according to one of Claims 2 to 10,
**characterised in that** at least one of the two components (5, 7) is a vehicle body component.

12. A clip element according to Claim 1 or component connection according to one of Claims 2 to 11, **characterised in that** the clip element (1) comprises plastics material.

## Revendications

1. Elément de clipsage (1) comprenant une tige creuse (1a) à élasticité radiale et un bord de serrage (1b) dépassant vers l'extérieur de la tige, l'élément de clipsage étant réalisé en forme de champignon,
• le bord de serrage (1b) étant élastiquement flexible dans la direction longitudinale de la tige (1a), et ainsi autour d'axes qui sont perpendiculaires à la direction longitudinale de la tige (1a), et
• une saillie (1c) s'étendant dans la direction périphérique sur la périphérie interne de la tige (1a),
**caractérisé en ce que**
le segment en forme de douille (1a) est ouvert à ses deux extrémités frontales.

2. Assemblage de pièces comprenant :
• une première pièce (5) dont dépasse un élément mâle de liaison par la forme (6),
• une seconde pièce (7) qui comporte un perçage traversant (8) dans lequel pénètre l'élément de liaison mâle par la forme (6),
• un élément de clipsage (1) qui comporte :
* un segment (1a) en forme de douille à élasticité radiale qui est clipsé par une liaison par la forme et/ou par friction sur l'élément mâle de liaison par la forme (6), et
* un bord de serrage (1b) dépassant vers l'extérieur du segment en forme de douille (1a), qui vient en prise au moins partiellement sur le perçage traversant (8) et s'applique ou est solidairement lié à la seconde pièce (7), sur la face de la seconde pièce (7) située à l'opposé de la première pièce (5), le bord de serrage (1b) étant élastiquement flexible dans la direction longitudinale de la tige (1a) et ainsi autour d'axes qui sont perpendiculaires à la direction longitudinale de la tige (1a), et
* une saillie périphérique (1c) est prévue sur la périphérie interne de la tige (1a), et
• l'élément de liaison par la forme mâle (6) est soudé sur la première pièce (5),
**caractérisé en ce que**
• l'élément mâle de liaison par la forme (6) a la forme d'une sphère ou une forme similaire à une sphère, et
• le segment en forme de douille (1a) est ouvert sur ses deux côtés frontaux.

3. Assemblage de pièces conforme à la revendication 2,
**caractérisée en ce que**
le perçage traversant (8) est circulaire et le segment en forme de douille (1a) a la forme d'un cylindre circulaire ou une forme similaire à un cylindre circulaire.

4. Assemblage de pièces conforme à la revendication 2,
**caractérisé en ce que**
le perçage traversant (8) est un trou oblong et le segment en forme de douille a une forme cylindrique adaptée à la forme du trou oblong (8).

5. Assemblage de pièces conforme à l'une des revendications 1 à 4,
**caractérisé en ce que**
le bord de serrage (1b) est lié en une seule pièce à la seconde pièce (7).

6. Assemblage de pièces conforme à l'une des revendications 2 à 5,
**caractérisé en ce qu'**
un segment (1c) de la tige en forme de douille (1a) situé à l'opposé du bord de serrage (1b) vient en prise par une liaison par la forme à l'arrière de l'élément mâle de liaison par la forme (6).

7. Assemblage de pièces conforme à l'une des revendications 2 à 6,
**caractérisé en ce que**
le bord de serrage (1b) est un bord de serrage périphérique.

8. Assemblage de pièces conforme à l'une des revendications 2 à 7,
**caractérisé en ce que**
le bord de serrage (1b) a la forme d'un capuchon ou d'un champignon.

9. Assemblage de pièces conforme à l'une des revendications 2 à 8,
**caractérisé en ce que**
l'élément mâle de liaison par la forme (6) comporte plusieurs éléments ou sections en forme de sphère.

10. Assemblage de pièces conforme à la revendication 9,
**caractérisé en ce que**
les éléments ou segments en forme de sphère de l'élément mâle de liaison par la forme (6) sont situés les uns derrière les autres selon une rangée.

11. Assemblage de pièces conforme à l'une des revendications 2 à 10,
**caractérisé en ce qu'**
au moins l'une des deux pièces (5, 7) est un composant de carrosserie de véhicule.

12. Elément de clipsage conforme à la revendication 1, ou assemblage de pièces conforme à l'une des revendications 2 à 11,
**caractérisé en ce que**
l'élément de clipsage (1) est réalisé en matière plastique.
